# EUROPEAN PATENT APPLICATION

(11) **EP 3 392 169 A1**
(43) Date of publication of application: **24.10.2018**
(21) Application number: 18163710.9
(22) Date of filing: 23.03.2018
(51) Int. Cl.: B65G 47/84, B65B 43/48, B65B 35/26

(54) **PACKAGE RAISER DEVICE AND ASSEMBLY**

(30) Priority: 19.04.2017 EP 17167140
(71) Applicant: Tetra Laval Holdings & Finance S.A., 1009 Pully (CH)
(72) Inventor: Nilsson, Fredrik, 22221 Lund (SE)
(74) Representative: Tetra Pak - Patent Attorneys SE

(57) **Abstract**

A package raiser assembly (100) is disclosed comprising an elongated raiser unit (101) pivotally connected to a first support element (102) around a rotational axis (103). The raiser unit has first and second side walls (106,107) extending along the rotational axis. The first side wall of the raiser unit is arranged to face a first support surface (108) of the first support element which is configured to be removably fixated to a base plate (201) having a second support element (202) removably fixated thereto. The second side wall (107) of the raiser unit is configured to be positioned to face a second support surface (208) of the second support element, when the first support element is fixed to the base plate at a final mounting position (203). The second side wall is configured to be positioned to face the second support surface in the final mounting position by being transversally movable relative to the second support surface along a mounting direction (205), perpendicular to the rotational axis.

## Description

### Technical Field

The present invention generally relates to the field of packaging machine systems and devices thereof for manipulating the trajectory of packaging containers in such systems. More particularly, the present invention relates to a rotary package raiser device that manipulates the position of the packaging containers such that they may assume a desired orientation in the packaging machine. A package raiser assembly and a method of assembling a package raiser device are also provided.

### Background

In the field of packaging machine systems various devices and methods exists for manipulating the trajectory of packaging containers as they are transported throughout the process line. A package raiser device is one example of such component, which manipulates the position of the packaging containers such that they may assume a desired orientation in the packaging machine. The package raiser device may be rotating about a rotational axis and has elongated raiser units along its periphery for interacting with the packaging containers. Each of the elongated raiser units may pivot relative to the rotary package raiser device and engage with a respective packaging container to affect the orientation thereof. In one application the packaging containers are correspondingly pivoted by the raiser units to assume an upright position relative to the package raiser device.

Problems with package raiser devices include cumbersome replacement procedures of the raiser units as they are worn in high speed production lines. Significant resources may accordingly be required for maintenance of such components, which may limit the throughput of the production line. Further issues with previous solutions relate to complex alignment procedures of interrelated components thereof, e.g. when performing maintenance, which will also add to the amount of resources required to keep the production line running. Such issues also lead to a lack of customization abilities of the package raiser device, due to the complex construction thereof which impede tailoring and optimization to the particular packaging containers being handled in the packaging machine.

Hence, an improved package raiser device, package raiser assembly, and method of assembling a package raiser device would be advantageous and in particular allowing for avoiding more of the above mentioned problems and compromises, including providing a more robust package raiser device, an easier to assemble or disassemble package raiser device, and a more customizable package raiser device. A related package raiser assembly and method of assembling a package raiser device would also be advantageous.

### Summary

Accordingly, examples of the present invention preferably seek to mitigate, alleviate or eliminate one or more deficiencies, disadvantages or issues in the art, such as the above-identified, singly or in any combination by providing a device according to the appended patent claims.

According to a first aspect a package raiser assembly for moving packaging containers is provided. The package raiser assembly comprises an elongated raiser unit pivotally connected to a first support element, whereby the raiser unit is rotatable relative the first support element around a rotational axis being perpendicular to a longitudinal direction in which the raiser unit extends. The raiser unit has a transverse width extending between first and second side walls of the raiser unit along the rotational axis, and the first side wall of the raiser unit is arranged to face a first support surface of the first support element and is arranged substantially in parallel with the first support surface. The first support element is configured to be removably fixated to a base plate having a second support element removably fixated thereto. The second side wall of the raiser unit is configured to be positioned to face a second support surface of the second support element, when the first support element is fixed to the base plate at a final mounting position, so that the first and second support surfaces are separated by a mounting distance corresponding substantially to the transverse width of the raiser unit, wherein the second side wall is configured to be positioned to face the second support surface in the final mounting position by being transversally movable relative to the second support surface along a mounting direction, perpendicular to the rotational axis, such that the first support element is movable along and parallel with said mounting direction to the final mounting position while pivotally connected to the raiser unit.

According to a second aspect a package raiser device for moving packaging containers is provided, comprising a package raiser assembly according to the first aspect, and a base plate and at least a second support element removably fixated thereto. The package raiser assembly comprising an elongated raiser unit pivotally connected to a first support element, whereby the raiser unit is rotatable relative the first support element around a rotational axis being perpendicular to a longitudinal direction in which the raiser unit extends. The raiser unit has a transverse width extending between first and second side walls of the raiser unit along the rotational axis. The first side wall of the raiser unit is arranged to face a first support surface of the first support element and is arranged substantially in parallel with the first support surface. The first support element is configured to be removably fixated to the base plate, wherein the second side wall of the raiser unit is configured to be positioned to face a second support surface of the second support element, when the first support element is fixed to the base plate at a final mounting position, so that the first and second support surfaces are separated by a mounting distance corresponding substantially to the transverse width of the raiser unit. The second side wall is configured to be positioned to face the second support surface in the final mounting position by being transversally movable relative to the second support surface along a mounting direction, perpendicular to the rotational axis, such that the first support element is movable along and parallel with said mounting direction to the final mounting position while pivotally connected to the raiser unit.

According to a third aspect a method of assembling a package raiser device having package raiser assembly according to the second aspect is provided. The package raiser assembly comprises an elongated raiser unit pivotally connected to a first support element, whereby the raiser unit is rotatable relative the first support element around a rotational axis being perpendicular to a longitudinal direction in which the raiser unit extends. The raiser unit has a transverse width extending between first and second side walls of the raiser unit along the rotational axis, wherein the first side wall of the raiser unit is arranged to face a first support surface of the first support element and is arranged substantially in parallel with the first support surface. The method comprises positioning the second side wall of the raiser unit to face a second support surface of a second support element removably fixated to a base plate so that the first and second support surfaces are separated by a mounting distance corresponding substantially to the transverse width of the raiser unit, wherein positioning the second side wall of the raiser unit to face the second support surface comprises moving the second side wall transversally relative to the second support surface along a mounting direction, perpendicular to the rotational axis, such that the first support element is movable along and parallel with said mounting direction to a final mounting position while pivotally connected to the raiser unit.

Further examples of the invention are defined in the dependent claims, wherein features for the second and third aspects of the disclosure are as for the first aspect mutatis mutandis.

Some examples of the disclosure provide for a package raiser assembly or raiser unit which is easier to mount to a package raiser device, and/or to dismount from package raiser device.

Some examples of the disclosure provide for less complex maintenance of a package raiser device.

Some examples of the disclosure provide for a package raiser device or raiser assembly which is more robust in a high speed production line.

Some examples of the disclosure provide for facilitated customization of a package raiser device to handle various packaging containers in a packaging machine.

Some examples of the disclosure provide for an easier alignment of a raiser unit in a package raiser device.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which examples of the invention are capable of will be apparent and elucidated from the following description of examples of the present invention, reference being made to the accompanying drawings, in which;
Fig. 1a is a schematic illustration of a package raiser device, in a top-down view, according to one example;
Fig. 1b is a schematic illustration of a package raiser assembly and a corresponding detail of a package raiser device, in a perspective view, according to one example;
Fig. 2 is a schematic illustration of a package raiser assembly, in an exploded perspective view, according to one example;
Fig. 3a is a schematic illustration of a package raiser assembly and a corresponding detail of a package raiser device, in a top-down view, where the package raiser assembly is dismounted from the package raiser device, according to one example;
Fig. 3b is a schematic illustration of a package raiser assembly and a corresponding detail of a package raiser device, in a top-down view, where the package raiser assembly is mounted to the package raiser device, according to one example;
Fig. 4 is a schematic illustration of a package raiser assembly and a corresponding detail of a package raiser device, in a perspective view, according to one example; and
Fig. 5 is a flowchart of a method of assembling a package raiser device, according to one example.

### Detailed Description

Specific examples of the invention will now be described with reference to the accompanying drawings. This invention may, however, be embodied in many different forms and should not be construed as limited to the examples set forth herein; rather, these examples are provided so that this disclosure will be thorough and complete, and will fully convey the scope of the invention to those skilled in the art. The terminology used in the detailed description of the examples illustrated in the accompanying drawings is not intended to be limiting of the invention. In the drawings, like numbers refer to like elements.

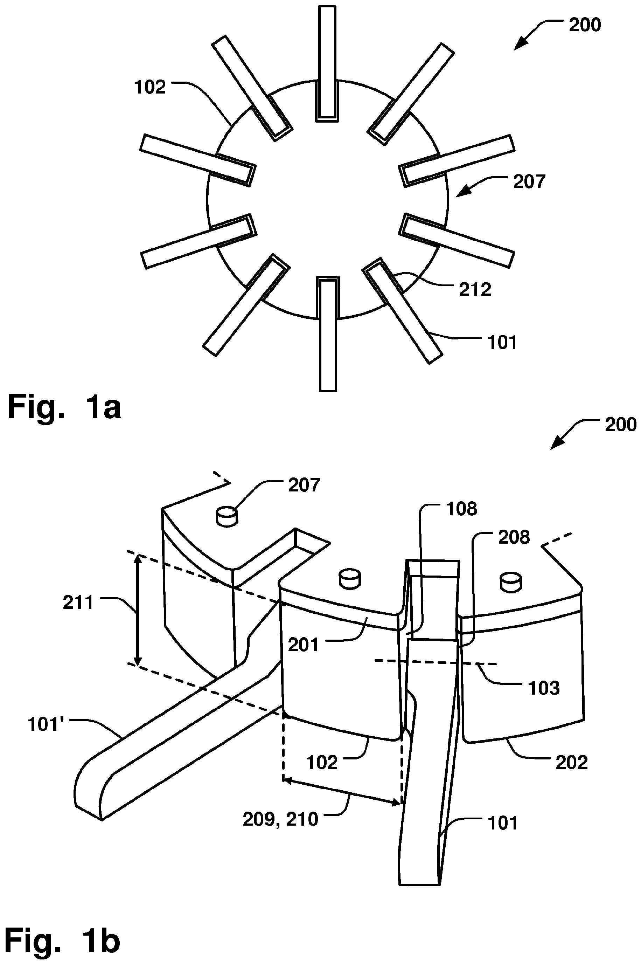

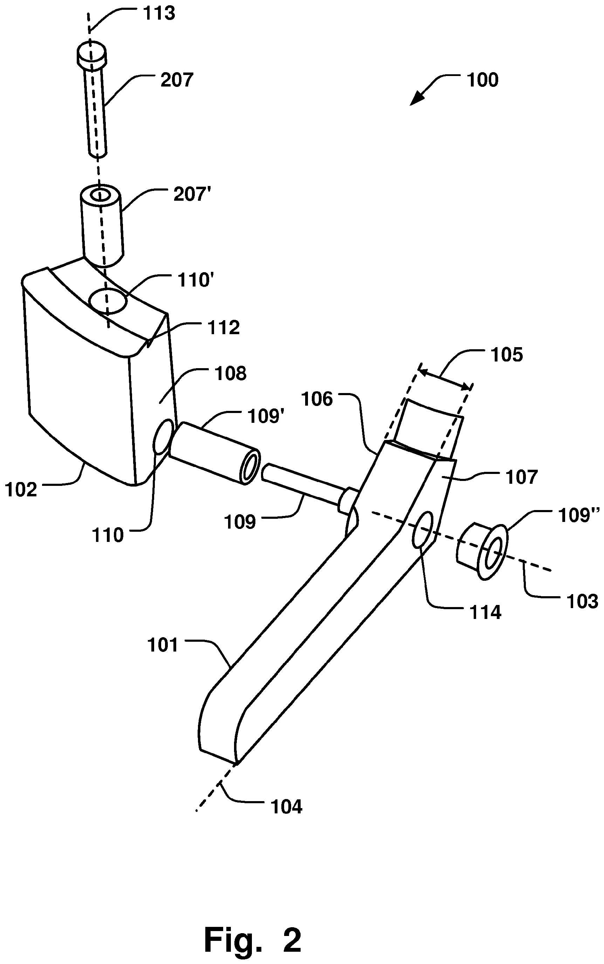

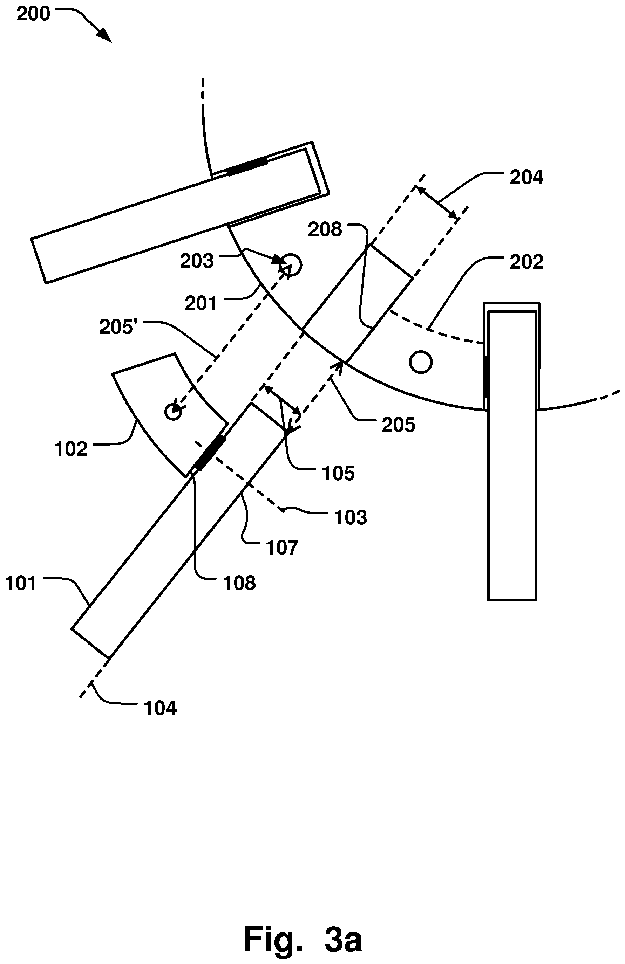

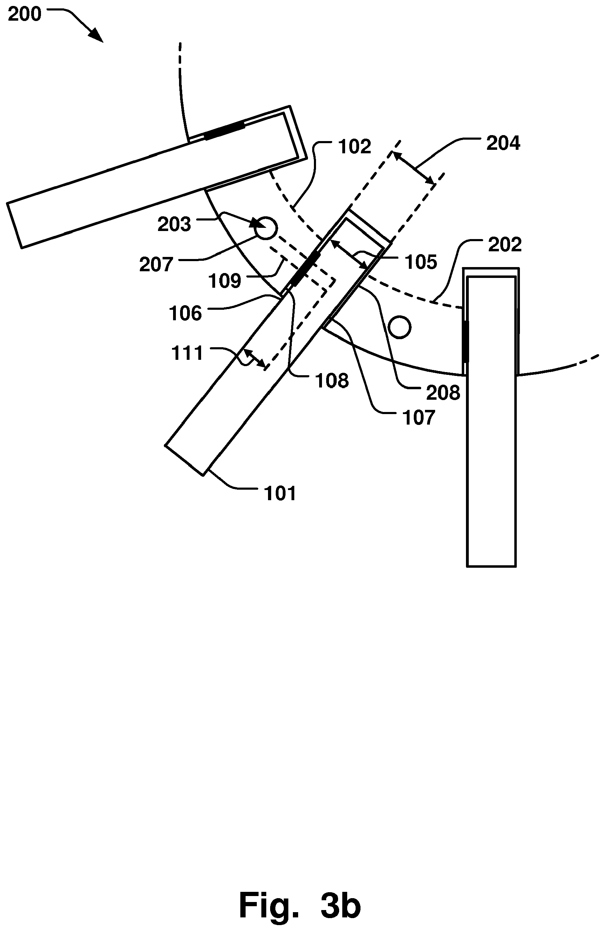

Fig. 1a schematically illustrates a package raiser device 200 having a plurality of raiser units 101 arranged around the periphery thereof. Each of the raiser units 101 engage sequentially with a series of packaging containers, as the raiser device 200 rotates around its axis, where each container will be reoriented by the pivoting action of the raiser units 101 relative to the raiser device 200. Fig. 1b schematically illustrates a detailed perspective view of a section of the package raiser device 200 in Fig. 1a. The raiser unit 101 and first support element 102 are illustrated in further detail in Fig. 2, showing a package raiser assembly 100. The package raiser assembly 100 thus comprises an elongated raiser unit 101 pivotally connected to a first support element 102. The raiser unit 101 is thereby rotatable relative the first support element 102 around a rotational axis 103 which is perpendicular to a longitudinal direction 104 in which the raiser unit 101 extends. The raiser unit 101 has a transverse width 105 extending between a first side wall 106 and a second side wall 107 of the raiser unit 101 along the rotational axis 103. I.e. the rotational axis 103 extends through the first and second side walls 106, 107. The first side wall 106 of the raiser unit 101 is arranged to face a first support surface 108 of the first support element 102 and is further arranged substantially in parallel with the first support surface 108. The first support element 102 is configured to be removably fixated to a base plate 201 having a second support element 202 removably fixated thereto. Fig. 1b shows a section of the base plate 201 to which the second support element 202 has been attached. In this view, also the first support element 102, and the raiser unit 101 being pivotally connected thereto, has been fixated to the base plate 201. The second side wall 107 of the raiser unit 101 is configured to be positioned to face a second support surface 208 of the second support element 202, when the first support element 102 is fixed to the base plate 201 at a final mounting position 203, so that the first and second support surfaces 108, 208, are separated by a mounting distance 204 corresponding substantially to the transverse width 105 of the raiser unit 101. Figs. 3a-b schematically illustrate a section of the raiser device 200, in top-down views, to which the raiser assembly 100 is mounted (Fig. 3b), or from which the raiser assembly is dismounted (Fig. 3a). Accordingly, as illustrated in Fig. 3b, when the first support element 102 has been fixated to the final mounting position 203 (see also Fig. 3a) of the base plate 201, the first and second support surfaces 108, 208, are separated by a mounting distance 204, corresponding substantially to the transverse width 105 of the raiser unit 101.

The second side wall 107 of the raiser unit 101 is configured to be positioned to face the second support surface 208 in the final mounting position 203 by being transversally movable relative to the second support surface 208 along a mounting direction 205, perpendicular to the rotational axis 103, such that the first support element 102 is movable in a direction 205' along and parallel with said mounting direction 205 to the final mounting position 203 while being pivotally connected to the raiser unit 101, as illustrated in Figs. 3a-b. By having the second side wall 107 transversally movable along the mounting direction 205 while the first support element 102 is arranged at the final mounting position 203, the raiser assembly 100 can be easily slid into place in the package raiser device 200, without having to care for any fixation units to be aligned with the second support element 202. This facilitates assembling and disassembling of the raiser units 101 to the package raiser device 200 in maintenance operations. The raiser units 101 are thus pivotally connected to the corresponding first support elements 102 which in turn are arranged at the base plate 201 at the respective mounting positions 203 around the periphery of the base plate 201. Since the first support elements 102 are movable in parallel with the mounting direction 205, while being connected to the raise units 101, until reaching the respective mounting positions 203 and the second side wall 107 faces the second support surface 208 in the final mounting position 203 of the raiser unit 101, it is not necessary to account for any alignment of the raiser unit 101 in relation to the second support surface 208 in order to fit the first support elements 102 into mounting position 203. Thus, replacement of the raiser units 101 is facilitated. The width of the raiser unit 101 in a direction parallel with the direction 103, i.e. the transverse width of the raiser unit 101, may vary along the longitudinal direction 104, while providing for the advantageous features as described above.

The raiser unit 101 may be pivotally connected to the first support element 102 by an axle unit 109 which is configured to interlock with a corresponding mating surface 110 of the first support element 102 to lock transverse movement of the raiser unit 101 relative the first support element 102, in directions perpendicular to the rotational axis 103. Fig. 2 illustrates an example of an axle unit 109, which is configured to engage with the first support element 102, to provide for a pivoting connection while locking movement in other directions, e.g. the longitudinal direction 104 of the raiser unit 101. The axle unit 109 may project from the first side wall 106 towards the first support element 102, as illustrated in Fig. 2. An axle length 111 of the portion of the axle unit 109 that extends from the first side wall 106 towards the second side wall 107 may be less than or substantially equal to the transverse width 105 of the raiser unit 101, as illustrated in Fig. 3b. The axle unit 109 may thus not extend beyond the second side wall 107. This minimizes the risk of interference between the axle unit 109 and a second support surface 208 of a second support element 202, when the raiser assembly 100 is mounted at the base plate 201. It also advantageously provides for facilitating the assembly or disassembly of the raiser unit 100, as the second side wall 107 can be readily moved along the mounting direction 205 to its final position facing the second support surface 208 without interference from the axle unit 109. The second side wall 107 may thus be substantially flush with the rest of the surface of the raiser unit 101 that face the same direction as the second side wall 107, i.e. free from any protruding elements that may interfere with a second support surface 208, or may require alignment to fit any recess of the second support surface 208.

The mating surface 110 may comprise a lumen 110 configured to receive the axle unit 109. The axle unit 109 may be arranged in a centering unit 109', which is inserted into the lumen 110 to facilitate the correct positioning of the raiser unit 101 relative the first support unit 102. A bushing 109" may engaged with the raiser unit 101 and/or the axle unit 109, for example by being inserted into a lumen 114 of the raiser unit 100, and thereby facilitate the alignment and securement of the raising unit in a pivoting connection with the first support element 102, as shown in Fig. 2. The bushing 109" may slide against the second support surface 208 along the mounting direction 205 upon the first support element 102 being fixated at the final mounting position 203. A second bushing (not shown) may be provided at the first side wall 106, around axle unit 109, for a rotational sliding motion against the first support surface 108.

The first support element 102 may comprise a lumen 110' extending in a direction 113 perpendicular to the rotational axis 103 and being configured to receive a removable fixation element 207 configured to lock relative movement between the first support element 102 and the base plate 201 when fixated thereto, as illustrated in e.g. Figs. 1b, 2, 3b, 4. This provides for a robust and simple fixation of the first support element 102 to the base plate 201. The removable fixation element 207 may comprise a bolt or screw or any element that is able to exert a force on the first support element 102 towards the base plate 201. By being able to fixate the first support element 102 directly to the base plate 201, it is also provided for a robust and facilitated fixation of the raiser unit 101 in relation to the base plate 201, since the number of intermediate components that needs to be aligned to eachother can be reduced. The lumen 110' may be concentrically arranged in the first support element 102, which may provide for an optimized fixation to the base plate 201, with a minimum of torque exposed to the first support element 102 when the package raiser device 200 rotates.

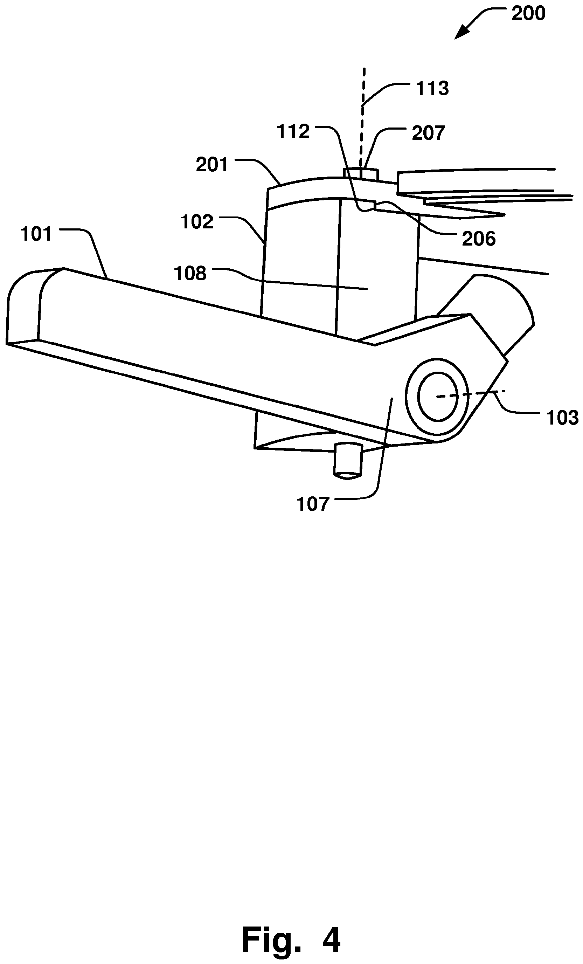

The first support element 102 may comprise a locking surface 112 as illustrated in Fig. 2. The locking surface 112 is arranged to face the base plate 201 when fixated thereto, as shown in Fig. 4. The locking surface 112 may be configured to interlock with a corresponding mating surface 206 of the base plate 201 so that rotation of the first support element 102 around an axis 113 perpendicular to the rotational axis 103 is locked. The locking surface 112 may thus securely fixate the first support element 102 to the base plate 201, and greatly improve the resistance to any twisting force occurring around axis 113.

Turning again to e.g. Figs. 1a-b, a package raiser device 200 is provided according to the present disclosure for moving packaging containers. The package raiser device 200 comprises a package raiser assembly 100 as described above and a base plate 201, and at least a second support element 202 removably fixated thereto. Again, the package raiser assembly 200 comprises an elongated raiser unit 101 pivotally connected to a first support element 102, whereby the raiser unit is rotatable relative the first support element around a rotational axis 103 being perpendicular to a longitudinal direction 104 in which the raiser unit extends. The raiser unit 101 has a transverse width 105 extending between first and second side walls 106, 107, of the raiser unit 101 along the rotational axis 103. The first side wall 106 of the raiser unit 101 is arranged to face a first support surface 108 of the first support element 102 and is arranged substantially in parallel with the first support surface 108. The first support element 102 is configured to be removably fixated to the base plate 201. The second side wall 107 of the raiser unit 101 is configured to be positioned to face a second support surface 208 of the second support element 202, when the first support element 102 is fixed to the base plate 201 at a final mounting position 203, so that the first and second support surfaces 108, 208, are separated by a mounting distance 204 corresponding substantially to the transverse width 105 of the raiser unit 101. The second side wall 108 is configured to be positioned to face the second support surface 208 in the final mounting position 203 by being transversally movable relative to the second support surface 208 along a mounting direction 205, perpendicular to the rotational axis 103, such that the first support element 102 is movable along and parallel with said mounting direction 205 to the final mounting position 203 while pivotally connected to the raiser unit 101.

The second side wall 107 may be transversally slidable against the second support surface 208 along the mounting direction 205 upon the first support element 102 being fixated at the final mounting position 203. Thus, when moving the first support element 102 into position at the final mounting position 203, the second side wall 107 of the raiser unit 101 may slide against the second support surface 208. This provides for a facilitated positioning and fixation of the raiser assembly 100 at the base plate 201, in particular just before arriving at the final mounting position 203, since the amount of available navigation space in the direction of the rotational axis 103 decrease due to the tapering in the radial inward direction of the circularly shaped package raiser device 200. The

The first support element 101 may be configured to be removably fixated to the base plate 201 by a single removable fixation element 207 extending between the base plate 201 and the first support element 102 to interlock with a corresponding mating surface 110' thereof. This provides for a quick assembly or disassembly of the first support element 101 and the raiser unit 101 pivotally connected thereto, to the base plate 201. The mating surface 110' may be a lumen 110' as discussed above or any surface that is able to interlock with the removable fixation element 207 to prevent relative movement therebetween. A centering unit 207' may be arranged in the lumen 110' to facilitate the correct positioning of the first support element 102 in the final mounting position 203.

Thus, the first support element 102 may be removable from the base plate 201 upon removal of the single removable fixation element 207, whereupon the first support element 102, and the raiser unit 101 pivotally connected thereto, are movable along the mounting direction 205, as schematically illustrated in e.g. Fig. 3a. Although it is conceivable that the raiser assembly can be moved to the final mounting position 203 along a direction which his not strictly parallel with the mounting direction 205 as illustrated, the path along which the assembly 100 is moved towards the mounting position becomes increasingly more parallel to the mounting direction 205 as the final mounting position 203 is approached and reached, due to the general tapering of the geometry of the base plate 201 and the annularly arranged raising assemblies 100 around its periphery 207. Thus, when the first support element 102 is positioned at or proximate the final mounting position 203, the second side wall 107 is transversally movable relative to the second support surface 208 along the mounting direction 205, providing for the advantages as described above.

The second side wall 107 may be parallel with second support surface 208. This provides for a compact and robust mounting of the raising unit 101 in the package raiser device 200.

As illustrated in Fig. 1a, the package raiser assembly 200 may comprise a plurality of raiser assemblies 100 arranged in a continuous annular configuration around a periphery 207 of the base plate 201 where each support element 102 of a corresponding raiser assembly 100 is positioned adjacent a second raiser assembly such that the support element 102 lock movement of a raiser unit 101' of the second raiser assembly in a direction parallel with the rotational axis 103 thereof. Turning to Fig. 1b, the first support element 101 may thus stop such movement of the second raiser unit 101', since the first support element 101 is arranged adjacent the (second) side wall of the raise unit 101. The plurality of raiser units 100 will thus be in interlocked positions around the periphery 207.

The support element 102 may have a width 209 that corresponds to the separation distance 210 between consecutive raiser units 101, 101', arranged around the periphery 207, as illustrated in Fig. 1a. This may both provide for a robust construction, since the support element 102 may be formed from a single monolithic piece, that supports the adjacent raiser unit 101', and a package raiser device 200 which is easy to customize to different unique packaging applications, since the support elements 102, 202, defines the peripheral surface between the raiser units 101, in the radial direction around the periphery 207. For example, by increasing the dimension of the support elements 102 in the radial direction, i.e. parallel with the longitudinal direction 104, the effective length of the raiser units 101 that protrude radially outward beyond the support elements can be reduced, without having to modify the base plate, which may be desired when handling packaging containers of a different dimension.

The support element 102 may have a height 211 that extends at least from the rotational axis 103 to the base plate 102. As elucidated above, this may provide for a robust construction, since there are no intermediate elements between the support element 102 and the base plate 201, and it facilitates the assembling and disassembling of the raiser assemblies 100.

The base plate 201 may be a single monolithic piece comprising a plurality of recesses 212 arranged around the periphery 207, wherein each recess 212 is configured to receive a pivoting raiser unit 101, 101'. This may provide for increased stability of the package raiser device 200, particularly in high-speed production lines. A more reliable package raiser device 200 may thus be provided.

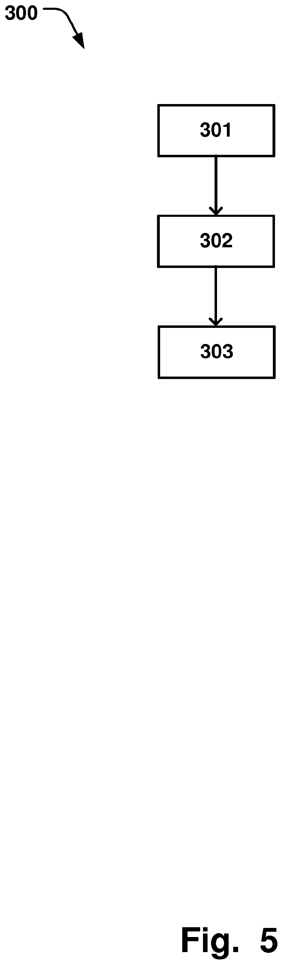

Fig. 5 illustrates a flow chart of a method 300 of assembling a package raiser device 200 having package raiser assembly 100 as described above. The order in which the steps of the method 300 are described and illustrated should not be construed as limiting and it is conceivable that the steps can be performed in varying order. The package raiser assembly 100 comprises an elongated raiser unit 101 pivotally connected to a first support element 102, whereby the raiser unit 101 is rotatable relative the first support element 102 around a rotational axis 103 being perpendicular to a longitudinal direction 104 in which the raiser unit 101 extends. The raiser unit 101 has a transverse width 105 extending between first and second side walls 106, 107 of the raiser unit 101 along the rotational axis 103. The first side wall 106 of the raiser unit 101 is arranged to face a first support surface 108 of the first support element 102 and is arranged substantially in parallel with the first support surface 108. The method 300 comprises positioning 301 the second side wall 107 of the raiser unit 101 to face a second support surface 208 of a second support element 202 removably fixated to a base plate 201 so that the first and second support surfaces 108, 208, are separated by a mounting distance 204 corresponding substantially to the transverse width 105 of the raiser unit 101. Positioning the second side wall 107 of the raiser unit to face the second support surface 208 comprises moving 302 the second side wall 107 transversally relative to the second support surface 208 along a mounting direction 205, perpendicular to the rotational axis 103, such that the first support element 102 is movable along and parallel with said mounting direction 205 to a final mounting position 203 while pivotally connected to the raiser unit 101. The method 300 thus provides for the above mentioned advantages discussed in relation to the raiser assembly 100 and the package raiser device 200.

The method 300 may comprise removing 303 the first support element 102 and the raiser unit 101 pivotally connected thereto by removing a single removable fixation element 207 extending between the base plate 201 and the first support element 102 to interlock with a corresponding mating surface 110' thereof, as described above.

The present invention has been described above with reference to specific examples. However, other examples than the above described are equally possible within the scope of the invention. The different features and steps of the invention may be combined in other combinations than those described. The scope of the invention is only limited by the appended patent claims.

More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used.

## Claims

1. A package raiser assembly (100) for moving packaging containers, comprising
an elongated raiser unit (101) pivotally connected to a first support element (102), whereby the raiser unit is rotatable relative the first support element around a rotational axis (103) being perpendicular to a longitudinal direction (104) in which the raiser unit extends,
wherein the raiser unit has a transverse width (105) extending between first and second side walls (106, 107) of the raiser unit along the rotational axis,
wherein the first side wall of the raiser unit is arranged to face a first support surface (108) of the first support element and is arranged substantially in parallel with the first support surface,
wherein the first support element is configured to be removably fixated to a base plate (201) having a second support element (202) removably fixated thereto,
wherein the second side wall of the raiser unit is configured to be positioned to face a second support surface (208) of the second support element, when the first support element is fixed to the base plate at a final mounting position (203), so that the first and second support surfaces are separated by a mounting distance (204) corresponding substantially to the transverse width of the raiser unit,
wherein the second side wall is configured to be positioned to face the second support surface in the final mounting position by being transversally movable relative to the second support surface along a mounting direction (205), perpendicular to the rotational axis, such that the first support element is movable along and parallel with said mounting direction to the final mounting position while pivotally connected to the raiser unit.

2. Package raiser assembly according to claim 1, wherein the raiser unit is pivotally connected to the first support element by an axle unit (109) which is configured to interlock with a corresponding mating surface (110) of the first support element to lock transverse movement of the raiser unit relative the first support element, in directions perpendicular to the rotational axis,
whereby the axle unit projects from the first side wall towards the first support element, and
wherein an axle length (111) of a portion of the axle unit that extends from the first side wall towards the second side wall is less than or substantially equal to the transverse width of the raiser unit.

3. Package raiser assembly according to claim 1 or 2, wherein the first support element comprises a lumen (110') extending in a direction perpendicular to said rotational axis and being configured to receive a removable fixation element (207) configured to lock relative movement between the first support element and the base plate when fixated thereto.

4. Package raiser assembly according to any of claims 1 - 3, wherein the first support element comprises a locking surface (112) arranged to face the base plate when fixated thereto, the locking surface is configured to interlock with a corresponding mating surface (206) of the base plate so that rotation of the first support element around an axis (113) perpendicular to said rotational axis is locked.

5. A package raiser device (200) for moving packaging containers, comprising a package raiser assembly according to any of claims 1 - 4 and a base plate (201) and at least a second support element (202) removably fixated thereto, the package raiser assembly comprising
an elongated raiser unit (101) pivotally connected to a first support element (102), whereby the raiser unit is rotatable relative the first support element around a rotational axis (103) being perpendicular to a longitudinal direction (104) in which the raiser unit extends,
wherein the raiser unit has a transverse width (105) extending between first and second side walls (106, 107) of the raiser unit along the rotational axis,
wherein the first side wall of the raiser unit is arranged to face a first support surface (108) of the first support element and is arranged substantially in parallel with the first support surface,
wherein the first support element is configured to be removably fixated to the base plate,
wherein the second side wall of the raiser unit is configured to be positioned to face a second support surface (208) of the second support element, when the first support element is fixed to the base plate at a final mounting position (203), so that the first and second support surfaces are separated by a mounting distance (204) corresponding substantially to the transverse width of the raiser unit,
wherein the second side wall is configured to be positioned to face the second support surface in the final mounting position by being transversally movable relative to the second support surface along a mounting direction (205), perpendicular to the rotational axis, such that the first support element is movable along and parallel with said mounting direction to the final mounting position while pivotally connected to the raiser unit.

6. Package raiser device according to claim 5, wherein the second side wall is transversally slidable against the second support surface along the mounting direction upon the first support element being fixated at the final mounting position.

7. Package raiser device according to claim 5 or 6, wherein the first support element is configured to be removably fixated to the base plate by a single removable fixation element (207) extending between the base plate and the first support element to interlock with a corresponding mating surface (110') thereof.

8. Package raiser device according to claim 7, wherein the first support element is removable from the base plate upon removal of the single removable fixation element, whereupon the first support element, and the raiser unit pivotally connected thereto, are movable along said mounting direction.

9. Package raiser device according to any of claims 5-8, wherein the second side wall is parallel with second support surface.

10. Package raiser device according to any of claims 5 - 9, comprising a plurality of raiser assemblies arranged in a continuous annular configuration around a periphery (207) of the base plate where each support element of a corresponding raiser assembly is positioned adjacent a second raiser assembly such that the support element lock movement of a raiser unit of the second raiser assembly in a direction parallel with the rotational axis thereof.

11. Package raiser device according to any of claims 5 - 10, wherein the support element has a width (209) that corresponds to the separation distance (210) between consecutive raiser units arranged around the periphery.

12. Package raiser device according to any of claims 5 - 11, wherein the support element has a height (211) that extends at least from the rotational axis to the base plate.

13. Package raiser device according to any of claims 5 - 12, wherein the base plate is a single monolithic piece comprising a plurality of recesses (212) arranged around the periphery, wherein each recess is configured to receive a pivoting raiser unit.

14. A method (300) of assembling a package raiser device (200) having package raiser assembly (100), the package raiser assembly comprising
an elongated raiser unit (101) pivotally connected to a first support element (102), whereby the raiser unit is rotatable relative the first support element around a rotational axis (103) being perpendicular to a longitudinal direction (104) in which the raiser unit extends,
wherein the raiser unit has a transverse width (105) extending between first and second side walls (106, 107) of the raiser unit along the rotational axis,
wherein the first side wall of the raiser unit is arranged to face a first support surface (108) of the first support element and is arranged substantially in parallel with the first support surface, the method comprising
positioning (301) the second side wall of the raiser unit to face a second support surface (208) of a second support element (202) removably fixated to a base plate (201) so that the first and second support surfaces are separated by a mounting distance (204) corresponding substantially to the transverse width of the raiser unit, wherein positioning the second side wall of the raiser unit to face the second support surface comprises
moving (302) the second side wall transversally relative to the second support surface along a mounting direction (205), perpendicular to the rotational axis, such that the first support element is movable along and parallel with said mounting direction to a final mounting position (203) while pivotally connected to the raiser unit.

15. Method according to claim 14, comprising removing (303) the first support element and the raiser unit pivotally connected thereto by removing a single removable fixation element (207) extending between the base plate and the first support element to interlock with a corresponding mating surface (110') thereof.
